# EUROPEAN PATENT SPECIFICATION

(11) **EP 2 318 169 B1**
(45) Date of publication and mention of the grant of the patent: **04.03.2015**
(21) Application number: 09801069.7
(22) Date of filing: 24.07.2009
(51) Int. Cl.: B23D 53/12, B23D 55/06

(54) **CHAINLESS DRIVE SYSTEM FOR A BAND SAW**
KETTENLOSES ANTRIEBSSYSTEM FÜR EINE BANDSÄGE
SYSTÈME D'ENTRAÎNEMENT SANS CHAÎNE POUR UNE SCIE À RUBAN

(30) Priority: 25.07.2008 US 83709 P
(43) Date of publication of application: 11.05.2011
(73) Proprietor: Milwaukee Electric Tool Corporation, Brookfield, WI 53005 (US)
(72) Inventor: ELGER, William, A., West Bend WI 50395 (US); BERTSCH, Matthew, T., New Berlin WI 53151 (US)
(74) Representative: Holmes, Matthew Peter
(86) International application number: PCT/US2009/051691
(87) International publication number: WO 2010/011925

(56) References cited:
- WO-A1-2005/070598
- DE-A1- 19 828 634
- GB-A- 895 732
- US-A- 1 449 805
- US-A- 2 596 081
- US-A- 3 566 731
- US-A- 4 001 937
- US-A1- 2007 068 011
- US-A1- 2007 256 512

## Description

### BACKGROUND OF THE INVENTION

The present invention relates to power tools, and more particularly to band saws.

Band saws are generally used for various cutting operations, such as for cutting pipe, conduit, and a variety of other materials. Band saws generally have drive train assemblies that use a chain or similar linking connection to engage a drive wheel of the band saw. The resultant rotation causes a band saw blade to rotate about the drive wheel and a driven wheel to effect the cutting operation. A bandsaw according to the preamble of claim 1 is known from DE 19828634.

### SUMMARY OF THE INVENTION

The present invention provides, a power tool including a housing, a first wheel rotatably coupled to the housing, a second wheel rotatably coupled to the housing, a continuous saw blade supported by the first and second wheels, and a motor supported by the housing. The motor includes an output shaft. The power tool also includes a drive train operably coupling the output shaft and the first wheel. The drive train includes a first stage gear assembly supported by the housing for rotation about a first axis substantially parallel to and offset from the motor output shaft, a second stage gear assembly supported by the housing for rotation about a second axis substantially perpendicular to the first axis, and a third stage gear assembly supported by the housing for rotation about a third axis substantially parallel to and offset from the second axis. The first wheel is rotatable about the third axis, and the central axis, defined by the output shaft of the motor, is substantially parallel to and offset from a longitudinal axis of the continuous sawblade.

Other features and aspects of the invention will become apparent by consideration of the following detailed description and accompanying drawings.

### BRIEF DESCRIPTION OF THE DRAWINGS

FIG. 1 is a front perspective view of a band saw of the present invention.
FIG. 2 is a rear perspective view of the band saw of FIG. 1.
FIG. 3 is a right side view of the band saw of FIG. 1.
FIG. 4 is a left side view of the band saw of FIG. 1, with the rotational axes of the wheels of the band saw oriented substantially normal to the plane of the page.

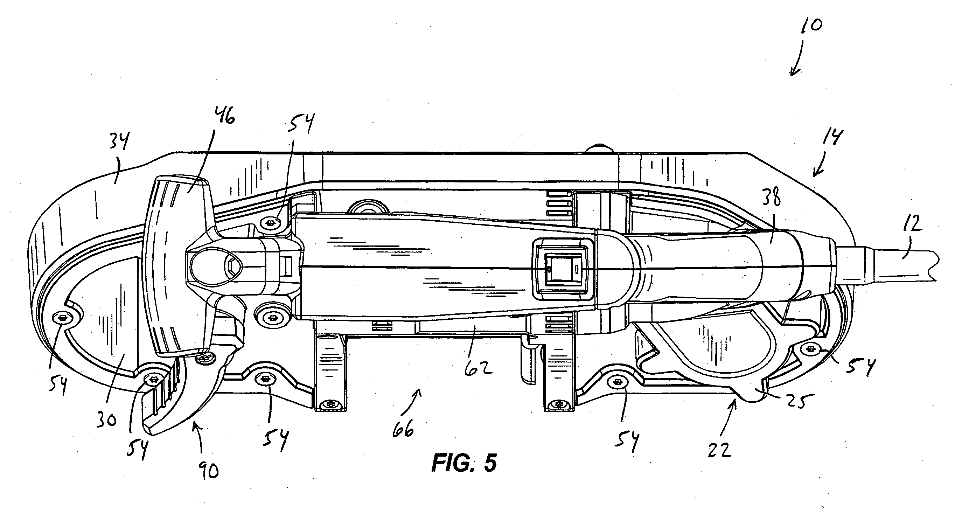

FIG. 5 is a top view of the band saw of FIG. 1.
FIG. 6 is an exploded perspective view of a portion of the band saw of FIG. 1.
FIG. 7 is an exploded, reverse perspective view of the portion of the band saw of FIG. 6.
FIG. 8 is an assembled, cross-sectional view of a portion of the band saw of FIG. 1 taken through line 8-8 in FIG. 1, illustrating a first stage gear reduction.
FIG. 9 is an assembled, cross-sectional view of a portion of the band saw of FIG. 1 taken through line 9-9 in FIG. 1, illustrating a second stage gear reduction.
FIG. 10 is an assembled, cross-sectional view of a portion of the band saw of FIG. 1 taken through line 10-10 in FIG. 3, illustrating a third stage gear reduction.

### DETAILED DESCRIPTION

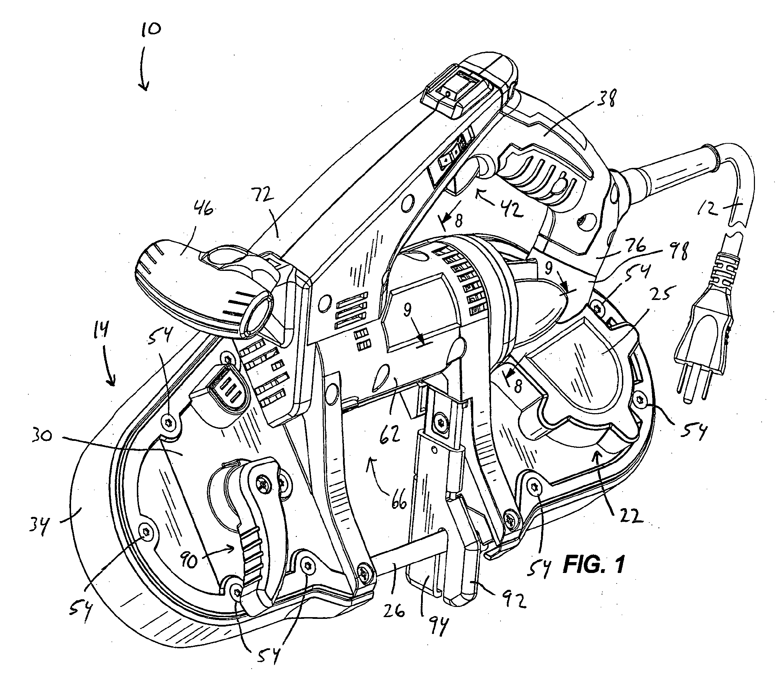

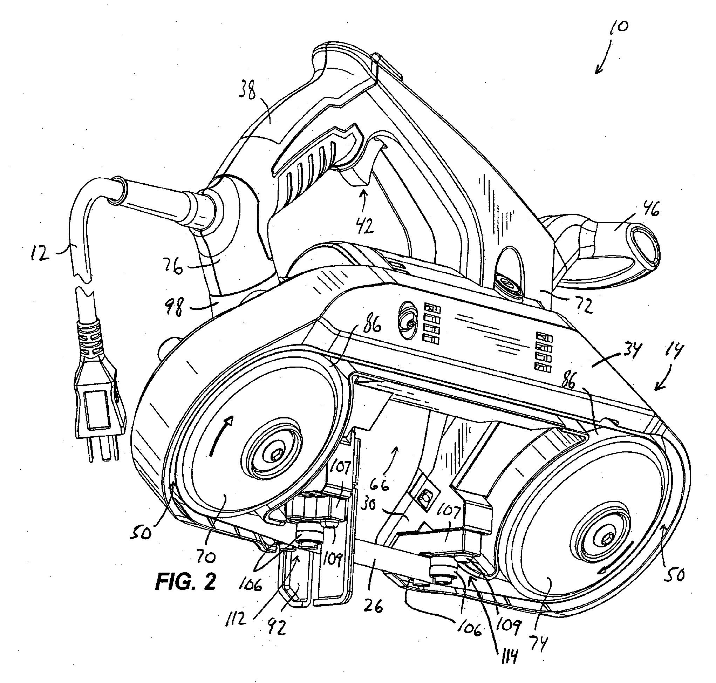

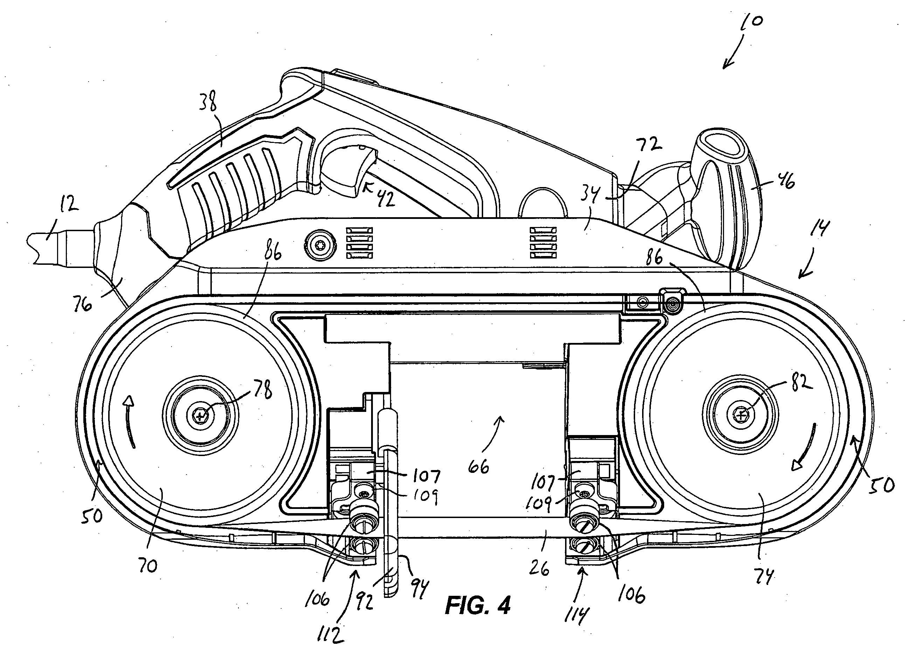

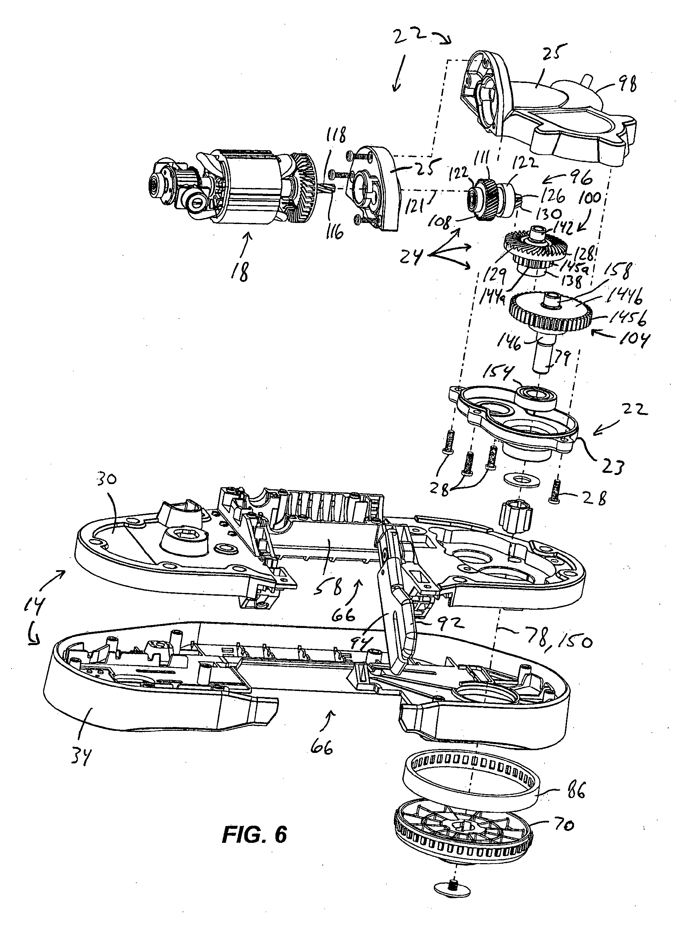

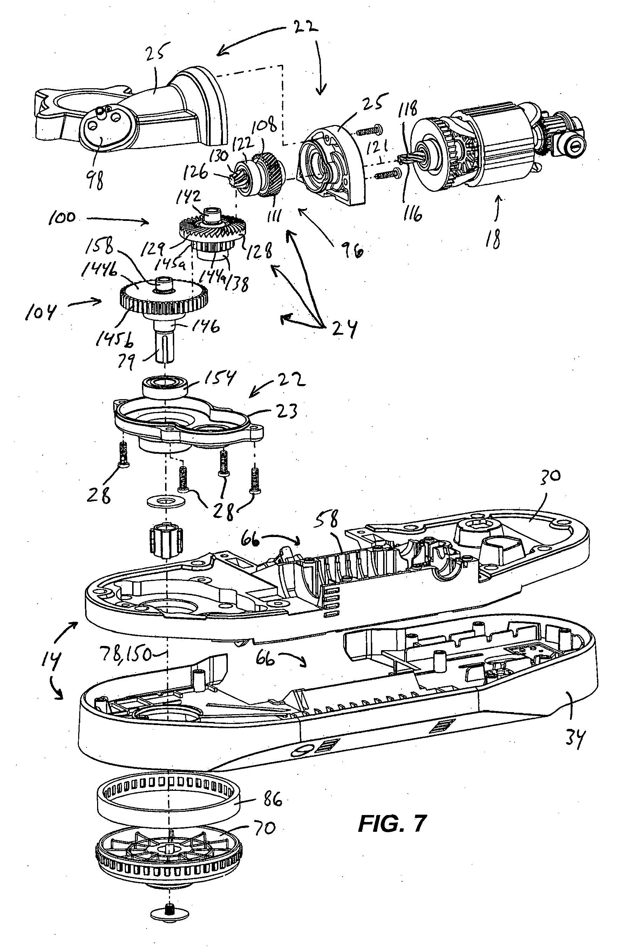

FIGS. 1 and 2 illustrate a band saw 10 including a first or a main housing 14 supporting a motor 18 (FIGS. 6 and 7) and a second or a transmission housing 22 supporting a drive train 24. As will be described in more detail below, the drive train 24 converts the relatively high-speed, low-torque input provided by the motor 18 to a relatively low-speed, high-torque output. The motor 18 and the drive train 24 are operable to drive a continuous band saw blade 26 to cut a work piece (FIG. 4). In the illustrated construction of the band saw 10, the motor 18 is configured as an AC motor, and the band saw 10 includes an electrical connection cord 12 connectable to a source of AC power (e.g., a household electrical outlet) to deliver AC power to the motor 18. Alternatively, the motor 18 may be configured as a DC motor and a battery may be utilized to provide power to the DC motor. Such a battery may be configured having any of a number of different voltages (e.g., 12, 14.4, 18, 24, 28 volts, etc.). Such a battery may also be configured having any of a number of different chemistries (e.g., Lithium-ion, Nickel Cadmium, Nickel Metal-Hydride, etc.).

With reference to FIGS. 1-3, the band saw 10 includes a main handle 38 supporting a switch assembly 42 to operate the band saw 10. The switch assembly 42 is operable to control operation of the motor 18. The band saw 10 also includes an auxiliary handle 46 for a user's other hand. Generally, the handles 38, 46 are shaped and arranged for two-handed operation of the band saw 10 as the work piece is cut. In the illustrated construction of the band saw 10, each handle 38, 46 has an ergonomic design to provide comfortable gripping and controlled operation of the band saw 10. The ergonomic design of each handle 38, 46 may include the orientation or angle of one or more of the handles 38, 46. The ergonomic design may also include the use of material, such as an elastomeric material, on one or more of the handles 38, 46 to provide an improved grip surface, isolate vibration and impacts from the operator, prevent heat build-up and/or heat transfer to the operator, etc.

With reference to FIGS. 6 and 7, the main housing 14 includes a deck 30 and a guard 34 coupled to the deck 30. A combination of the deck 30 and the guard 34 defines an opening or U-shaped cavity 66 in which a work piece is received during a cutting operation. While the saw blade 26 is exposed across the length of the cavity 66, the guard 34 provides a recessed area 50 in which a substantial portion of the band saw blade 26 is positioned (FIG. 4). In the illustrated construction of the band saw 10, the guard 34 is formed as a separate piece from the deck 30 and is removably coupled to the deck 30 (e.g., using fasteners 54; see FIG. 1). The guard 74 is made of a hard plastic or polymer material and is positioned around a perimeter of the deck 30 to protect the perimeter of the deck 30 from bumps and scratches that occur during use. Alternatively, the deck 30 and the guard 34 may be integrally formed as a single piece. The band saw 10 also includes a shoe 92 coupled to the main housing 14 and having a support surface 94 against which a work piece is abutted during a cutting operation (FIG. 1).

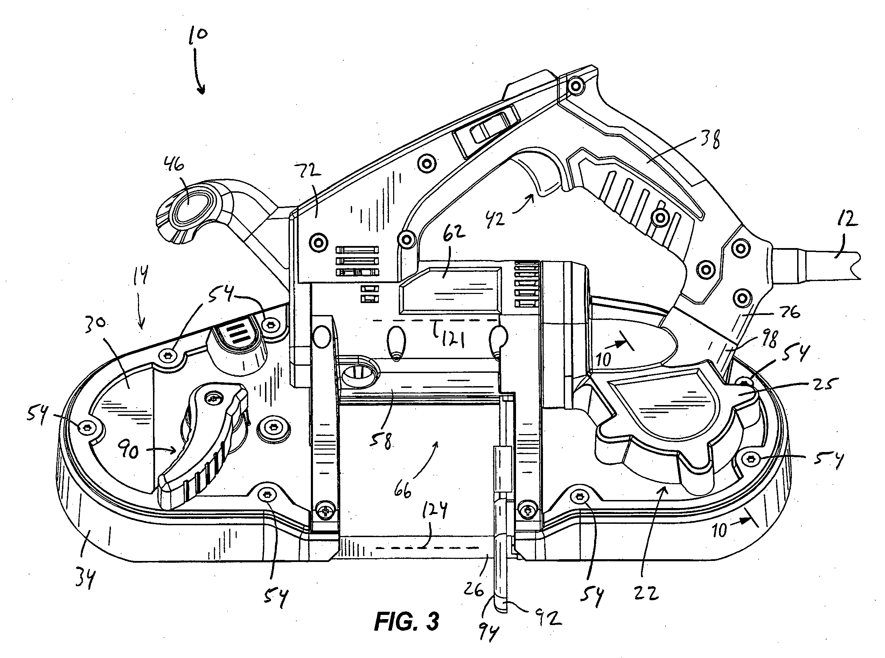

With reference to FIGS. 6 and 7, the deck 30 includes a motor support portion 58 and a separate motor cover 62 (FIG. 1) that together enclose the motor 18. In the illustrated construction of the band saw 10, the motor support portion 58 is adjacent the cavity 66 and defines an upper boundary of the cavity 66. Alternatively, the motor support portion 58 may be located remotely from the cavity 66. With reference to FIG. 3, the main handle 38 includes a first end 72 coupled to the motor support portion 58 of the housing 14 at a location nearer the front of the cavity 66 than the rear of the cavity 66. The main handle 38 also includes a second end 76 coupled to the housing 14 at a location nearer the rear of the cavity 66 than the front of the cavity 66.

With reference to FIGS. 2 and 4, the band saw 10 includes a drive wheel 70 and a driven wheel 74. The outer peripheral surface and an interior side of each of the drive wheel 70 and the driven wheel 74 are covered by the deck 30 and the guard 34. The drive wheel 70 rotates about a drive wheel axis 78 and is drivingly connected to the motor 18 via the drive train 24 in the transmission housing 22 (FIG. 4). The driven wheel 74 rotates about a driven wheel axis 82 that is substantially parallel to the drive wheel axis 78 and is rotatably supported by the deck 30.

A tire 86 is coupled to the periphery of each of the drive wheel 70 and the driven wheel 74 (FIGS. 6 and 7). Each of the tires 86 is a circular-shaped ring formed of a soft and/or flexible elastomeric material that is able to lock or adhere to the drive wheel 70 or the driven wheel 74. The band saw blade 26 extends around the drive wheel 70 and the driven wheel 74 and grips the tires 86 and, as a result, motion from the drive wheel 70 is transmitted to the band saw blade 26 via the tires 86. With reference to FIG. 1, the band saw 10 also includes a blade tensioning mechanism 90 coupled to the deck 30 to adjustably provide appropriate tension on the band saw blade 26. Specifically, the blade tensioning mechanism 90 is operable to move the driven wheel 74 left-to-right from the point of view of FIG. 4 to increase or decrease the tension in the band saw blade 26.

With reference to FIGS. 2 and 4, the band saw 10 includes a first guide roller set 112 disposed on one side of the cavity 66 and a second guide roller set 114 disposed on an opposite side of the cavity 66. Each of the guide roller sets 112, 114 includes aligned rollers 106 with which opposite sides of the saw blade 26 are engaged and a mounting block 107 to which the rollers 106 are rotatably supported. The mounting blocks 107 are coupled to the deck 30 using fasteners (e.g., bolts or screws 109). The first and second guide roller sets 112, 114 support the band saw blade 26 as the blade 26 moves across the cavity.

With reference to FIGS. 6 and 7, the transmission housing 22 includes a base 23 and a two-piece cover 25 sealed to the base 23 (e.g., using a gasket, an elastomeric seal, etc.) to contain a lubricant (e.g., grease, oil, etc.) inside the transmission housing 22 to lubricate the drive train 24. The transmission housing 22 is coupled to the deck 30 of the main housing 14 using the same fasteners (i.e., bolts or screws 28) that secure the cover 25 to the base 23. As a result of the transmission housing 22 being separate from the main housing 14, the transmission housing 22 may be removed from the main housing 14 to simplify maintenance of the drive train 24. Alternatively, the transmission housing 22 may be integrally formed with the main housing 14 as a single piece. With reference to FIG. 7, the transmission housing 22 includes a mount 98 to which the second end 76 of the handle 38 is attached.

With reference to FIGS. 6 and 7, the drive train 24 utilizes a three-stage gear reduction to transfer torque from the motor 18 to the drive wheel 70 to rotate the drive wheel 70. The drive train 24 includes a first stage gear assembly 96 coupled to the motor 18 to receive torque from the motor 18, a second stage gear assembly 100, and a third stage gear assembly 104 coupled to the drive wheel 70. As such, the drive train 24 does not utilize an endless drive member (e.g., a chain or belt, for example) to transfer torque from the motor 18 to the drive wheel 70. Although the drive train 24 is shown and described utilizing a three-stage gear reduction, the drive train 24 may alternatively be configured having more than three stages of gear reduction.

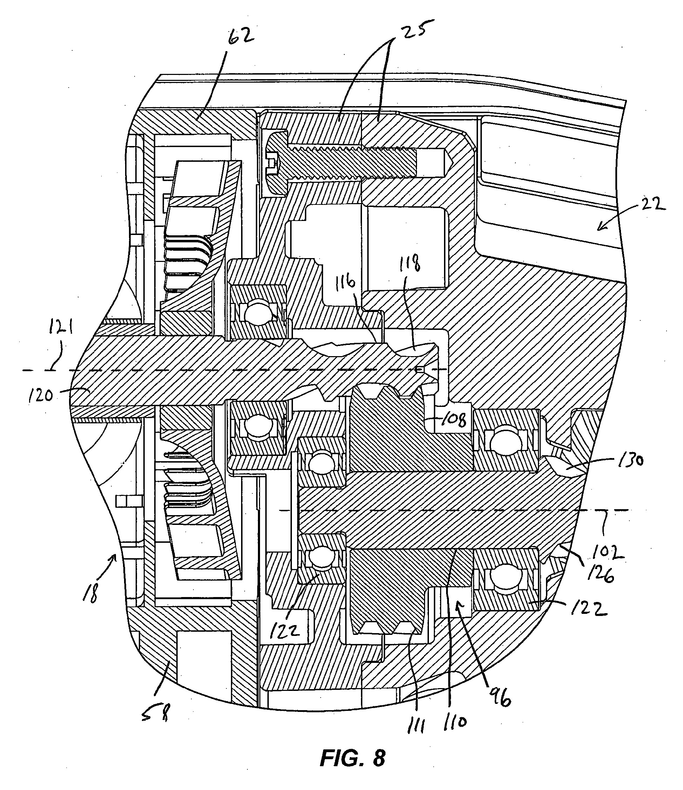

With reference to FIGS. 6-8, the motor 18 includes an output shaft 120 defining a central axis 121, and a pinion 116 coupled to the output shaft 120. The motor 18 is oriented relative to the blade 26 such that the central axis 121 of the motor output shaft 120 is oriented substantially parallel with a longitudinal axis 124 of the blade 26 when the blade 26 is in the cavity 66 (FIG. 3). In the illustrated construction of the band saw 10, the pinion 116 is integrally formed or machined with the output shaft 120 (FIG. 8). The pinion 116 is configured as a helical pinion 116 having a plurality of helical gear teeth 118 formed thereon. The first stage gear assembly 96 includes a shaft 110 (FIG. 8) supported for rotation about a first axis 102 substantially parallel to and offset from the output shaft 120 of the motor 18. Particularly, the shaft 110 is supported by a plurality of bearings 122 received in the cover. Although the illustrated bearings 122 are configured as ball bearings 122, other bearing configurations (e.g., roller bearings, sleeve bearings, bushings, etc.) may alternatively be utilized.

The first stage gear assembly 96 also includes a helical gear 108, coupled for co-rotation with the shaft 110, that is driven by the helical pinion 116 on the motor output shaft 120. The helical gear 108 is coupled to the shaft 110 using a press-fit. Alternatively, the helical gear 108 may be coupled to the shaft 110 in any of a number of different ways (e.g., using a key and keyway arrangement, splines, by welding, brazing, using adhesives, etc.). As a further alternative, the helical gear 108 may be integrally formed as a single piece with the shaft 110. With reference to FIGS. 6 and 7, the gear 108 includes helical gear teeth 111 that mesh with the helical gear teeth 118 of the pinion 116 to transfer torque from the motor output shaft 120 to the first stage gear assembly 96. Alternatively, the pinion 116 and the gear 108 may each include straight-cut teeth rather than the illustrated helical teeth 111, 118. In the illustrated construction of the band saw 10, the helical gear 108 includes 34 teeth 111 and the helical pinion 116 includes 5 teeth 118, providing a speed reduction ratio between the helical gear 108 and the helical pinion 116 of about 6.8:1. Alternatively, at least one of the helical gear 108 and the helical pinion 116 may include a different number of teeth 111, 118, respectively, to provide a speed reduction ratio between the helical gear 108 and the helical pinion 116 greater than or less than 6.8:1. As a further alternative, the first stage gear assembly 96 may include other gear configurations (e.g., a worm gear) to provide the 6.8:1 speed reduction ratio or any of a number of different speed reduction ratios.

The first stage gear assembly 96 also includes a pinion 126 coupled for co-rotation with the shaft 110. The pinion 126 includes helical gear teeth 130, and is integrally formed as a single piece with the shaft 110. Alternatively, the pinion 126 may be a separate and distinct component from the shaft 110, and may be coupled to the shaft 110 for co-rotation with the shaft 110 in any of a number of different ways (e.g., using a key and keyway arrangement, splines, a press-fit, by welding, brazing, using adhesives, etc.).

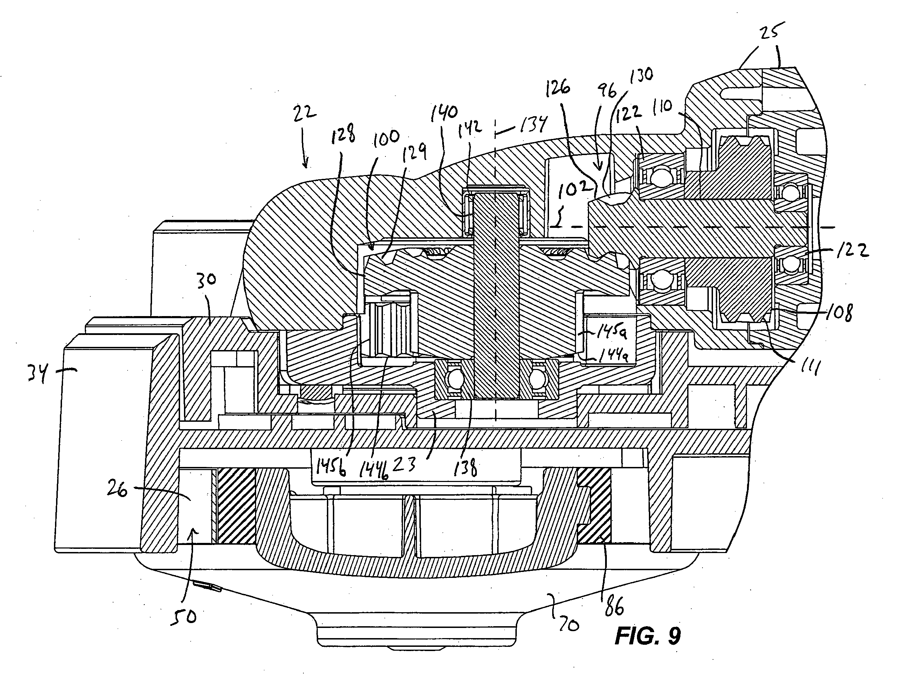

The second stage gear assembly 100 includes a shaft 140 (FIG. 9) supported for rotation about a second axis 134 substantially perpendicular to the first axis 102. The first and second axes 102, 134 intersect and are contained within a common plane (i.e., the plane of the page of FIG. 9). Particularly, the shaft 140 is supported by a plurality of bearings 138, 142 in the transmission housing 22. As shown in FIG. 9, the lower bearing 138 is configured as a ball bearing and is supported within the base 23 of the transmission housing 22, and the upper bearing 142 is configured as a needle bearing and is disposed within the cover 25 of the transmission housing 22. The shaft 140 is press-fit into the inner race of at least one of the bearings 138, 142 to axially constrain the shaft 140 within the transmission housing 22. Alternatively, one or both of the bearings 138, 142 may be configured as non-roller bearings (e.g., sleeve bearings or bushings), and the shaft 140 may be axially constrained within the transmission housing 22 by other means.

With reference to FIGS. 6 and 7, the second stage gear assembly 100 also includes a spiral bevel gear 128, coupled for co-rotation with the shaft 140, that is driven by the helical pinion 126 of the first stage gear assembly 96. The spiral bevel gear 128 is coupled to the shaft 140 using a press-fit (FIG. 9). Alternatively, the spiral bevel gear 128 may be coupled to the shaft 140 in any of a number of different ways (e.g., using a key and keyway arrangement, splines, by welding, brazing, using adhesives, etc.). As a further alternative, the spiral bevel gear 128 may be integrally formed as a single piece with the shaft 140. With reference to FIGS. 6 and 7, the gear 128 includes helical teeth 129 that mesh with the helical gear teeth 130 of the pinion 126 to transfer torque from the pinion 126 to the second stage gear assembly 100. Alternatively, the pinion 126 and the gear 128 may each include straight-cut teeth rather than the illustrated helical teeth 129, 130. In the illustrated construction of the band saw 10, the spiral bevel gear 128 includes 37 teeth 129 and the helical pinion 126 includes 8 teeth 130, providing a speed reduction ratio between the spiral bevel gear 128 and the helical pinion 126 of about 4.625:1. Alternatively, at least one of the spiral bevel gear 128 and the helical pinion 126 may include a different number of teeth 129, 130, respectively, to provide a speed reduction ratio between the spiral bevel gear 128 and the helical pinion 126 greater than or less than 4.625:1. As a further alternative, the second stage gear assembly 100 may include other gear configurations (e.g., a zero bevel gear, a miter gear, a crown gear, a hypoid gear, etc.) to provide the 4.625:1 speed reduction ratio or any of a number of different speed reduction ratios.

The second stage gear assembly 100 also includes a spur gear 144a coupled for co-rotation with the shaft 140. The spur gear 144a includes straight-cut gear teeth 145a, and is integrally formed as a single piece with the spiral bevel gear 128. Alternatively, the spur gear 144a may be a separate and distinct component from the spiral bevel gear 128, and may be coupled to the shaft 140 for co-rotation with the shaft 140 in any of a number of different ways (e.g., using a key and keyway arrangement, splines, a press-fit, by welding, brazing, using adhesives, etc.). The spur gear 144a is positioned beneath the spiral bevel gear 128 from the point of view of FIG. 9, and includes a smaller nominal diameter than the spiral bevel gear 128.

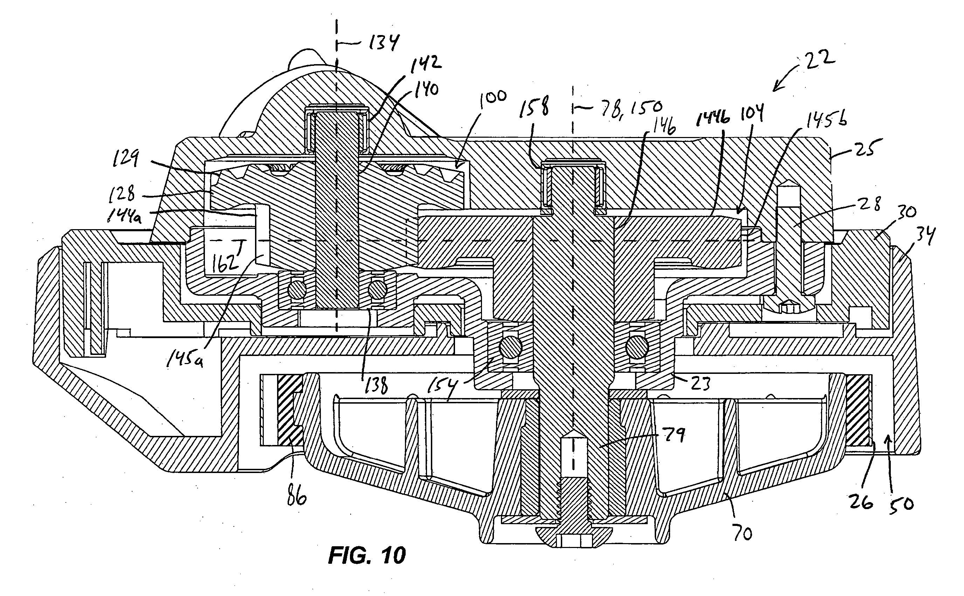

The third stage gear assembly 104 includes a shaft 146, having an axle portion 79 upon which the drive wheel 70 is mounted, supported for rotation about a third axis 150 substantially parallel to and offset from the second axis 134 (FIG. 10). The third axis 150 is also coaxial with the drive wheel axis 78 and perpendicular with the central axis 121. Particularly, the shaft 146 is supported by a plurality of bearings 154, 158 in the transmission housing 22. As shown in FIG. 10, the lower bearing 154 is configured as a ball bearing and is supported within the base 23 of the transmission housing 22, and the upper bearing 158 is configured as a needle bearing and is disposed within the cover 25 of the transmission housing 22. The shaft 146 is press-fit into the inner race of at least one of the bearings 154, 158 to axially constrain the shaft 146 within the transmission housing 22. Alternatively, one or both of the bearings 154, 158 may be configured as non-roller bearings (e.g., sleeve bearings or bushings), and the shaft 146 may be axially constrained within the transmission housing 22 by other means.

With reference to FIGS. 6 and 7, the third stage gear assembly 104 also includes a spur gear 144b, coupled for co-rotation with the shaft 146, that is driven by the spur gear 144a of the second stage gear assembly 100. As shown in FIG. 10, the spiral bevel gear 128 at least partially overlaps the spur gear 144b and is positioned above the spur gear 144b. Also, the spur gears 144a, 144b are aligned with a common plane 162 that is oriented substantially perpendicular to the second and third axes 134, 150. In the illustrated construction of the band saw 10, the spur gear 144b is coupled to the shaft using a press-fit. Alternatively, the spur gear 144b may be coupled to the shaft 146 in any of a number of different ways (e.g., using a key and keyway arrangement, splines, by welding, brazing, using adhesives, etc.). As a further alternative, the spur gear 144b may be integrally formed as a single piece with the shaft 146. With reference to FIGS. 6 and 7, the spur gear 144b includes straight-cut teeth 145b that mesh with the straight-cut teeth 145a of the spur gear 144a to transfer torque from the spur gear 144a to the third stage gear assembly 104. Alternatively, the gears 144a, 144b may each include helical teeth rather than the illustrated straight-cut teeth 145a, 145b. In the illustrated construction of the band saw 10, the spur gear 144b includes 46 teeth 145b and the spur gear 144a includes 21 teeth 145a, providing a speed reduction ratio between the spur gear 144b and the spur gear 144a of about 2.2:1. Alternatively, at least one of the spur gears 144a, 144b may include a different number of teeth 145a, 145b, respectively, to provide a speed reduction ratio between the spur gear 144b and the spur gear 144a greater than or less than 2.2:1. As a further alternative, the third stage gear assembly 104 may include other gear configurations to provide the 2.2:1 speed reduction ratio or any of a number of different speed reduction ratios.

Overall, the drive train 24 provides a speed reduction ratio between the output shaft 120 of the motor 18 and the shaft 146 of the third stage gear assembly 104 of about 69.2:1.

In operation of the band saw 10, the torque output by the motor 18 through the motor output shaft 120 is transferred to the drive wheel 70 via the drive train 24 without utilizing an endless drive member (e.g., a chain, belt, etc.). By orienting the respective gear assemblies 96, 100, 104 of the drive train 24 within the transmission housing 22 as described above, the band saw 10 is more compact and balanced compared to a conventional portable band saw.

Various features of the invention are set forth in the following claims.

## Claims

1. A power tool comprising:
a housing (14, 22);
a first wheel (70) rotatably coupled to the housing (14, 22);
a second wheel (74) rotatably coupled to the housing (14, 22);
a continuous saw blade (26) supported by the first and second wheels (70, 74);
a motor (18) supported by the housing (14, 22), the motor (18) including an output shaft (120) defining a central axis (121); and
a drive train (24) operably coupling the output shaft (120) and the first wheel (70), the drive train (24) including
a first stage gear assembly (96) supported by the housing (14, 22) for rotation about a first axis (102) substantially parallel to and offset from the central axis (121);
a second stage gear assembly (100) supported by the housing (14, 22) for rotation about a second axis (134); and
a third stage gear assembly (104) supported by the housing (14, 22) for rotation about a third axis (150) substantially parallel to and offset from the second axis (134);
wherein the first wheel (70) is rotatable about the third axis (150);
**characterized in that** the second axis (134) is substantially perpendicular to the first axis (102) and **in that** the central axis (121) is substantially parallel to and offset from a longitudinal axis of the continuous saw blade (26).

2. The power tool of claim 1, further comprising a pinion (116) coupled to the output shaft (120), and wherein the first stage gear assembly (96) includes
a first gear (108) meshed with the pinion (116); and
a second gear (126) coupled for co-rotation with the first gear (108) about the first axis (102) and spaced from the first gear (108) along the first axis (102).

3. The power tool of claim 2, wherein the pinion (116) is a helical pinion, and wherein the first gear (108) is a helical gear; and/or wherein the second gear (126) is a helical gear.

4. The power tool of claim 2, wherein the second stage gear assembly (100) includes
a third gear (128) meshed with the second gear (126); and
a fourth gear (144a) coupled for co-rotation with the third gear (128) about the second axis (134) and spaced from the third gear (128) along the second axis (134).

5. The power tool of claim 4, wherein the second gear (126) is a helical gear, and wherein the third gear (128) is a spiral bevel gear; and/or wherein the fourth gear (144a) is a spur gear.

6. The power tool of claim 4, wherein the third stage gear assembly (104) includes a fifth gear (144b) meshed with the fourth gear (144a) and coupled for co-rotation with the first wheel (70) about the third axis (150).

7. The power tool of claim 6, wherein the fourth and fifth gears (144a, 144b) are spur gears.

8. The power tool of claim 6, wherein the third gear (128) and the fifth gear (144b) at least partially overlap each other.

9. The power tool of claim 6, wherein the fourth gear (144a) and the fifth gear (144b) are aligned with a common plane (162).

10. The power tool of claim 1, wherein the housing (14, 22) includes an opening (66) disposed between the first and second wheels (70, 74), and wherein the first and second wheels (70, 74) support the saw blade (26) as it is moved across the opening (66); or
further comprising a pinion (116) integrally formed with the output shaft (120).

11. The power tool of claim 10, wherein the first stage gear assembly (96), the second stage gear assembly (100), and the third stage gear assembly (104) are located on one side of the opening (66) in the housing (14, 22); or
wherein the motor (18) is located adjacent the opening (66) in the housing (14, 22).

12. The power tool of claim 1, wherein the central axis (121) is substantially perpendicular to the third axis (150).

13. The power tool of claim 1, wherein the housing (14, 22) includes a motor support portion (58) In which the motor (18) is positioned, wherein the power tool further includes a handle (38) having at least one end (72) coupled to the motor support portion (58) of the housing; and optionally wherein the handle (38) is aligned with a plane, and the central axis (121) is oriented substantially parallel with the plane.

14. The power tool of claim 1, wherein the first axis (102) and the second axis (134) intersect each other and are contained within a common plane (162).

15. The power tool of claim 1, wherein the housing is a first housing (14), wherein the power tool further includes
a second housing (22) in which the drive train (24) is at least partially disposed; and
a handle (38) having at least one end (76) coupled to the second housing (22).

16. The power tool of claim 1, wherein the housing is a first housing (14) and includes a motor support portion (58) in which the motor (18) is positioned, wherein the power tool further includes
a second housing (22) in which the drive train (24) is at least partially disposed; and
a handle (38) having a first end (72) extending from the motor support portion (58) and a second end (76) extending from the second housing (22).

## Patentansprüche

1. Elektrowerkzeug, das Folgendes umfasst:
ein Gehäuse (14, 22),
ein erstes Rad (70), das drehbar an das Gehäuse (14, 22) gekoppelt ist,
ein zweites Rad (74), das drehbar an das Gehäuse (14, 22) gekoppelt ist,
in endloses Sägeblatt (26), das durch das erste und das zweite Rad (70, 74) getragen wird,
einen Motor (18), der durch das Gehäuse (14, 22) getragen wird, wobei der Motor (18) eine Abtriebswelle (120), die eine Mittelachse (121) definiert, einschließt, und
einen Antriebsstrang (24), der die Abtriebswelle (120) und das erste Rad (70) wirksam koppelt, wobei der Antriebsstrang (24) Folgendes einschließt:
eine Getriebebaugruppe der ersten Stufe (96), die für eine Drehung um eine erste Achse (102), im Wesentlichen parallel zu der Mittelachse (121) und gegenüber derselben versetzt, durch das Gehäuse (14, 22) getragen wird,
eine Getriebebaugruppe der zweiten Stufe (100), die für eine Drehung um eine zweite Achse (134) durch das Gehäuse (14, 22) getragen wird, und
eine Getriebebaugruppe der dritten Stufe (104), die für eine Drehung um eine dritte Achse (150), im Wesentlichen parallel zu der zweiten Achse (134) und gegenüber derselben versetzt, durch das Gehäuse (14, 22) getragen wird,
wobei das erste Rad (70) um die dritte Achse (150) drehbar ist,
**dadurch gekennzeichnet, dass** die zweite Achse (134) im Wesentlichen senkrecht zu der ersten Achse (102) ist, und dadurch, dass die Mittelachse (121) im Wesentlichen parallel zu einer Längsachse des endlosen Sägeblattes (26) und gegenüber derselben versetzt ist.

2. Elektrowerkzeug nach Anspruch 1, das ferner ein Ritzel (116), das an die Abtriebswelle (120) gekoppelt ist, umfasst und wobei die Getriebebaugruppe der ersten Stufe (96) Folgendes einschließt:
ein erstes Zahnrad (108) in Eingriff mit dem Ritzel (116) und
ein zweites Zahnrad (126), das für eine gemeinsame Drehung mit dem ersten Zahnrad (108) um die erste Achse (102) gekoppelt und entlang der ersten Achse (102) von dem ersten Zahnrad (108) beabstandet ist.

3. Elektrowerkzeug nach Anspruch 2, wobei das Ritzel (116) ein Schrägritzel ist und wobei das erste Zahnrad (108) ein Schrägstirnrad ist und/oder wobei das zweite Zahnrad (126) ein Schrägstirnrad ist.

4. Elektrowerkzeug nach Anspruch 2, wobei die Getriebebaugruppe der zweiten Stufe (100) Folgendes einschließt:
ein drittes Zahnrad (128) in Eingriff mit dem zweiten Zahnrad (126) und
ein viertes Zahnrad (144a), das für eine gemeinsame Drehung mit dem dritten Zahnrad (128) um die zweite Achse (134) gekoppelt und entlang der zweiten Achse (134) von dem dritten Zahnrad (128) beabstandet ist.

5. Elektrowerkzeug nach Anspruch 4, wobei das zweite Zahnrad (126) ein Schrägstirnrad ist und wobei das dritte Zahnrad (128) ein Spiralkegelrad ist und/oder wobei das vierte Zahnrad (144a) ein Geradstirnrad ist.

6. Elektrowerkzeug nach Anspruch 4, wobei die Getriebebaugruppe der dritten Stufe (104) ein fünftes Zahnrad (144b), in Eingriff mit dem vierten Zahnrad (144a) und für eine gemeinsame Drehung mit dem ersten Rad (70) um die dritte Achse (150) gekoppelt, einschließt.

7. Elektrowerkzeug nach Anspruch 6, wobei das vierte und das fünfte Zahnrad (144a, 144b) Geradstirnräder sind.

8. Elektrowerkzeug nach Anspruch 6, wobei das dritte Zahnrad (128) und das fünfte Zahnrad (144b) einander wenigstens teilweise überlappen.

9. Elektrowerkzeug nach Anspruch 6, wobei das vierte Zahnrad (144a) und das fünfte Zahnrad (144b) mit einer gemeinsamen Ebene (162) ausgerichtet sind.

10. Elektrowerkzeug nach Anspruch 1, wobei das Gehäuse (14, 22) eine Öffnung (66), die zwischen dem ersten und dem zweiten Rad (70, 74) angeordnet ist, einschließt und wobei das erste und das zweite Rad (70, 74) das Sägeblatt (26) stützen, wenn es über die Öffnung (66) bewegt wird, oder
das ferner ein Ritzel (116), das integral mit der Abtriebswelle (120) geformt ist, umfasst.

11. Elektrowerkzeug nach Anspruch 10, wobei die Getriebebaugruppe der ersten Stufe (96), die Getriebebaugruppe der zweiten Stufe (100) und die Getriebebaugruppe der dritten Stufe (104) auf einer Seite der Öffnung (66) in dem Gehäuse (14, 22) angeordnet sind oder
wobei der Motor (18) angrenzend an die Öffnung (66) in dem Gehäuse (14, 22) angeordnet ist.

12. Elektrowerkzeug nach Anspruch 1, wobei die Mittelachse (121) im Wesentlichen senkrecht zu der dritten Achse (150) ist.

13. Elektrowerkzeug nach Anspruch 1, wobei das Gehäuse (14, 22) einen Motorstützabschnitt (58), in dem der Motor (18) angeordnet ist, einschließt, wobei das Elektrowerkzeug ferner einen Handgriff (38) einschließt, der wenigstens ein Ende (72) hat, das an den Motorstützabschnitt (58) des Gehäuses gekoppelt ist, und wobei der Handgriff (38) wahlweise mit einer Ebene ausgerichtet ist und die Mittelachse (121) im Wesentlichen parallel mit der Ebene ausgerichtet ist.

14. Elektrowerkzeug nach Anspruch 1, wobei die erste Achse (102) und die zweite Achse (134) einander schneiden und innerhalb einer gemeinsamen Ebene (162) enthalten sind.

15. Elektrowerkzeug nach Anspruch 1, wobei das Gehäuse ein erstes Gehäuse (14) ist, wobei das Elektrowerkzeug ferner Folgendes einschließt:
ein zweites Gehäuse (22), in dem der Antriebsstrang (24) wenigstens teilweise angeordnet ist, und
einen Handgriff (38), der wenigstens ein Ende (76) hat, das an das zweite Gehäuse (22) gekoppelt ist.

16. Elektrowerkzeug nach Anspruch 1, wobei das Gehäuse ein erstes Gehäuse (14) ist und einen Motorstützabschnitt (58), in dem der Motor (18) angeordnet ist, einschließt, wobei das Elektrowerkzeug ferner Folgendes einschließt:
ein zweites Gehäuse (22), in dem der Antriebsstrang (24) wenigstens teilweise angeordnet ist, und
einen Handgriff (38), der ein erstes Ende (72), das sich von dem Motorstützabschnitt (58) aus erstreckt, und ein zweites Ende (76), das sich von dem zweiten Gehäuse (22) aus erstreckt, hat.

## Revendications

1. Outil électrique comprenant :
un boîtier (14, 22) ;
une première roue (70) couplée de manière rotative au boîtier (14, 22) ;
une seconde roue (74) couplée de manière rotative au boîtier (14, 22) ;
une lame de scie continue (26) supportée par les première et seconde roues (70, 74) ;
un moteur (18) supporté par le boîtier (14, 22), le moteur (18) comprenant un arbre de sortie (120) définissant un axe central (121) ; et
une transmission (24) couplant de manière fonctionnelle l'arbre de sortie (120) et la première roue (70), la transmission (24) comprenant
un ensemble d'engrenages de premier étage (96) supporté par le boîtier (14, 22) permettant une rotation autour d'un premier axe (102) essentiellement parallèle et décalé par rapport à l'axe central (121) ;
un ensemble d'engrenages de deuxième étage (100) supporté par le boîtier (14, 22) permettant une rotation autour d'un deuxième axe (134) ; et
un ensemble d'engrenages de troisième étage (104) supporté par le boîtier (14, 22) permettant une rotation autour d'un troisième axe (150) essentiellement parallèle et décalé par rapport au deuxième axe (134) ;
dans lequel la première roue (70) est rotative autour du troisième axe (150) ;
**caractérisé en ce que** le deuxième axe (134) est essentiellement perpendiculaire au premier axe (102) et l'axe central (121) est essentiellement parallèle et décalé par rapport à un axe longitudinal de la lame de scie continue (26).

2. Outil électrique selon la revendication 1, comprenant en outre un pignon (116) couplé à l'arbre de sortie (120), et dans lequel l'ensemble d'engrenages de premier étage (96) comprend
un premier engrenage (108) engrenant avec le pignon (116) ; et
un deuxième engrenage (126) couplé pour une co-rotation avec le premier engrenage (108) autour du premier axe (102) et espacé par rapport au premier engrenage (108) le long du premier axe (102).

3. Outil électrique selon la revendication 2, dans lequel le pignon (116) est un pignon à denture hélicoïdale, et dans lequel le premier engrenage (108) est un engrenage à denture hélicoïdale ; et/ou dans lequel le deuxième engrenage (126) est un engrenage à denture hélicoïdale.

4. Outil électrique selon la revendication 2, dans lequel l'ensemble d'engrenages de deuxième étage (100) comprend
un troisième engrenage (128) engrenant avec le deuxième engrenage (126) ; et
un quatrième engrenage (144a) couplé pour une co-rotation avec le troisième engrenage (128) autour du deuxième axe (134) et espacé par rapport au troisième engrenage (128) le long du deuxième axe (134).

5. Outil électrique selon la revendication 4, dans lequel le deuxième engrenage (126) est un engrenage à denture hélicoïdale, et dans lequel le troisième engrenage (128) est un engrenage conique à denture spirale ; et/ou dans lequel le quatrième engrenage (144a) est un engrenage à denture droite.

6. Outil électrique selon la revendication 4, dans lequel l'ensemble d'engrenages de troisième étage (104) comprend un cinquième engrenage (144b) engrenant avec le quatrième engrenage (144a) et couplé pour une co-rotation avec la première roue (70) autour du troisième axe (150).

7. Outil électrique selon la revendication 6, dans lequel les quatrième et cinquième engrenages (144a, 144b) sont des engrenages à denture droite.

8. Outil électrique selon la revendication 6, dans lequel le troisième engrenage (128) et le cinquième engrenage (144b) se chevauchent au moins partiellement.

9. Outil électrique selon la revendication 6, dans lequel le quatrième engrenage (144a) et le cinquième engrenage (144b) sont alignés par rapport à un plan commun (162).

10. Outil électrique selon la revendication 1, dans lequel le boîtier (14, 22) comprend une ouverture (66) agencée entre les première et seconde roues (70, 74), et dans lequel les première et seconde roues (70, 74) supportent la lame de scie (26) lorsqu'elle est déplacée à travers l'ouverture (66) ; ou
comprenant en outre un pignon (116) formé solidairement avec l'arbre de sortie (120).

11. Outil électrique selon la revendication 10, dans lequel l'ensemble d'engrenages de premier étage (96), l'ensemble d'engrenages de deuxième étage (100), et l'ensemble d'engrenages de troisième étage (104) sont situés sur un côté de l'ouverture (66) du boîtier (14, 22) ; ou
dans lequel le moteur (18) est situé adjacent à l'ouverture (66) du boîtier (14, 22).

12. Outil électrique selon la revendication 1, dans lequel l'axe central (121) est essentiellement perpendiculaire au troisième axe (150).

13. Outil électrique selon la revendication 1, dans lequel le boîtier (14, 22) comprend une partie support moteur (58) dans laquelle est positionné le moteur (18), l'outil électrique comprend en outre une poignée (38) présentant au moins une extrémité (72) couplée à la partie support moteur (58) du boîtier ; et éventuellement dans lequel la poignée (38) est alignée par rapport à un plan, et l'axe central (121) est orienté de manière essentiellement parallèle au plan.

14. Outil électrique selon la revendication 1, dans lequel le premier axe (102) et le deuxième axe (134) se croisent et sont contenus dans un plan commun (162).

15. Outil électrique selon la revendication 1, dans lequel le boîtier est un premier boîtier (14), l'outil électrique comprenant en outre
un second boîtier (22) dans lequel la transmission (24) est au moins partiellement agencée ; et
une poignée (38) présentant au moins une extrémité (76) couplée au second boîtier (22).

16. Outil électrique selon la revendication 1, dans lequel le boîtier est un premier boîtier (14) et comprend une partie support moteur (58) dans laquelle est positionné le moteur (18), l'outil électrique comprenant en outre
un second boîtier (22) dans lequel la transmission (24) est au moins partiellement agencée ; et
une poignée (38) présentant une première extrémité (72) s'étendant à partir de la partie support moteur (58) et une seconde extrémité (76) s'étendant à partir du second boîtier (22).
